# EUROPÄISCHE PATENTSCHRIFT

(11) **EP 1 783 384 B1**
(45) Veröffentlichungstag und Bekanntmachung des Hinweises auf die Patenterteilung: **12.09.2012**
(21) Anmeldenummer: 06015738.5
(22) Anmeldetag: 28.07.2006
(51) Int. Cl.: F16C 21/00, F16C 33/78, F16D 3/20, F16J 15/32, F16D 3/38

(54) **Kreuzgelenkanordnung**
Universal joint assembly
Ensemble de joint universel

(30) Priorität: 08.11.2005 DE 102005053558
(43) Veröffentlichungstag der Anmeldung: 09.05.2007
(73) Patentinhaber: Voith Turbo GmbH & Co. KG, 89522 Heidenheim (DE)
(72) Erfinder: Grawenhof, Peter, 89547 Dettingen (DE); Wegmann, Holger, 89522 Heidenheim (DE)
(74) Vertreter: Dr. Weitzel & Partner

(56) Entgegenhaltungen:
- DE-A1- 10 335 872
- DE-A1- 19 754 699
- DE-C1- 3 639 315
- DE-U1- 8 616 597
- JP-U- 54 060 151
- US-A1- 2005 035 555

## Beschreibung

Die Erfindung betrifft eine Kreuzgelenkanordnung mit einer Dichteinrichtung, im Einzelnen mit den Merkmalen aus dem Oberbegriff des Anspruchs 1.

Kreuzgelenkanordnungen für den Einsatz in Gelenkwellen umfassen ein in zwei Gelenkgabeln, insbesondere Gelenkgabelhälften gelagertes Zapfenkreuz, wobei die einzelnen Zapfen über entsprechende Lageranordnungen in den Lagerbohrungen der Gelenkgabelhälften gelagert sind. Die einzelne Lageranordnung umfasst dabei zumindest ein Radiallager und vorzugsweise auch noch ein Axiallager. Die Anordnung des Axiallagers kann dabei verschiedenartig erfolgen, vorzugsweise wird dieses in den Bereich der Zapfenwurzel des Zapfenkreuzes verlagert. Bei den Lagern handelt es sich in der Regel um Wälzlager. Diese sind geschmiert. Zur Vermeidung des Eintrittes von Verunreinigungen im Bereich der Lageranordnung ist diese gegenüber der Umgebung abgedichtet, das heißt der Raum zwischen dem Zapfenkreuz der Lageranordnung und der Gelenkgabelhälfte wird abgedichtet. Dazu sind in der Regel entsprechende Dichteinrichtungen vorgesehen, die verschiedenartig ausgeführt sein können.

Am häufigsten werden dabei Spezialdichtungen direkt in die zylindrische Lagerbüchse eingepresst. Nachdem der Einpressdurchmesser zugleich Laufbahndurchmesser ist, welcher bei vollrolligen Lagern durch Wälzkörperanzahl und Wälzkörperdurchmesser vorgegeben wird, kann dabei nicht auf handelsübliche Dichtungen zurückgegriffen werden. Spezialdichtungen sind jedoch nicht zuletzt aufgrund der erforderlichen Sonderwerkzeuge speziell bei kleinen Stückzahlen äußerst teuer. Um diesen Nachteil auszugleichen, werden in der Praxis häufig Dichtungsprofile eingesetzt. Bei diesen handelt es sich in der Regel um Meterware, die an den Einzelfall angepasst zum Einsatz gelangt, wobei sich jedoch Stoßstellen bei Verbindung der einzelnen Enden ergeben. Ferner können eine Mehrzahl einzelner Dichtungseinrichtungen vorgesehen werden, die hintereinander geschaltet sind, wobei für die einzelnen Dichteinrichtungen jeweils entsprechende Ausnehmungen an einem der dafür vorgesehenen Dichtungshalter zum Zwecke der Befestigung beziehungsweise Lagefixierung vorgesehen werden müssen. Das die Dichtung tragende Element wird auch als Dichtungshalter bezeichnet, verfügt über eine flexiblere Durchmessergestaltung, ist dabei jedoch sehr komplex gestaltet, wobei die Gestaltung im Wesentlichen von der Ausbildung der Gelenkgabelhälfte sowie der Ausführung der Lageranordnung abhängig ist. Dabei sind für verschiedene Ausführungen von Gelenkgabelhälften auch verschiedene Dichtungshalter in Form von hohlzylindrischen oder ringförmigen Tragelementen erforderlich. Der konstruktive Aufwand einer derartigen Lösung ist somit sehr hoch. Ferner kann aufgrund der Spezifik der Ausgestaltung der Dichtungen eine absolute Dichtheit nicht immer erreicht werden. Die Stossstellen sind störanfällig. Bei Nichteinhaltung der erforderlichen Toleranzen ist die Funktion der Abdichtung nicht mehr gewährleistet.

Ferner ist aus der Druckschrift WO 2005/017376 A1 eine Dichtungsanordnung für Kreuzgelenkanordnungen bekannt, welche als Dreifachdichtungseinheit ausgeführt ist und zur Abdichtung von Lageranordnungen für die Zapfenkreuze in Gelenkwellen vorbekannt. Die Dreifachdichtung umfasst dabei ein hohlzylindrisches Grundelement mit einem sich in radialer Richtung erstreckenden Vorsprung, wobei am hohlzylindrischen Grundelement drei Dichtlippen angeordnet sind. Die erste und die zweite Dichtlippe sind parallel zueinander und in radialer Richtung ausgerichtet und bilden eine Dichtfläche zur Anlage an einer zylindrischen Fläche. Die dritte Dichtlippe bildet eine Dichtfläche zur Anlage an einer Planfläche und ist in einem Winkel zu den ersten beiden Dichtlippen angeordnet. Gegenüber einer federvorgespannten Dichtung unterliegt der Dichtungselastomer aber einer Alterung einhergehend mit Relaxation. Speziell bei Walzwerksanwendungen, wo es aufgrund hoher Belastungen auch zu hohen elastischen Verformungen im Dichtungsbereich kommen kann, stellt ein derartiges Verhalten einen gewissen Nachteil einer solchen Dichtungsanordnung dar.

Der Erfindung liegt daher die Aufgabe zugrunde, eine Dichtungsanordnung für eine Kreuzgelenkanordnung der eingangs genannten Art derart weiterzuentwickeln, dass zum einen immer eine optimale Dichtwirkung gewährleistet ist, die Dichtung hoch flexibel ist und größere Wege elastisch ausgleichen kann, ferner der Aufbau der Dichtung einfach ist und eine leichte und sichere Montage der Dichtung gegeben ist, die Anordnung beim Nachschmieren den Austritt von Fett bzw. Schmierstoff ermöglicht und sich die Dichteinheit durch einen hohen Grad an Zuverlässigkeit und Alterungsbeständigkeit auszeichnet.

Die erfindungsgemäße Lösung ist durch die Merkmale des Anspruchs 1 charakterisiert. Vorteilhafte Ausgestaltungen sind in den Unteransprüchen beschrieben.

Erfindungsgemäß erfolgt in einer Kreuzgelenkanordnung zur Abdichtung der Lageranordnung, insbesondere gegenüber der Gelenkgabel, der Einsatz einer federelastischen Dichteinheit.

Die erfindungsgemäße Dichteinheit umfasst eine Trageinheit und wenigstens eine Dichtlippe, wobei die von der Dichtlippe gebildete Dichtfläche über ein elastisches Element abgestützt und vorgespannt wird und somit die Dichtfläche in ihre Lage fixiert wird. Dadurch wird es möglich, dass zum einen die Anforderung an die einzuhaltenden Toleranzen der Abmaße der Dichteinheit nicht so hoch gestellt sind, da diese auf einfache Art und Weise ausgeglichen werden können und ferner die Dichtwirkung an der Dichtlippe durch das Aufbringen einer Vorspannkraft durch eine Federeinheit eingestellt werden kann, was durch die Wahl der konkreten Federeinheit erfolgt. Zugleich ermöglicht dieser Aufbau auch im Betrieb eine sichere Funktion speziell bei größeren Relativbewegungen zwischen Dichtungssitz und Dichtlippe.

Im Gegensatz zu bekannten federvorgespannten Dichtungen, wo die Feder als Zugfeder ausgebildet ist und die Dichtlippe dabei gegen die Welle zieht, fungiert die verwendete Federeinheit dabei als Druckfeder, wobei diese an der der Dichtfläche abgewandten Seite beziehungsweise gegenüberliegenden Fläche wirksam wird und vorzugsweise im Bereich der Erstreckung des Wirkungsbereiches der Dichtfläche an der gegenüberliegenden Seite an der Dichtlippe wirksam wird. Vorzugsweise greift die Federeinheit mittig am Flächenbereich der Dichtlippe an, der dem die Dichtfläche bildenden Flächenbereich gegenüberliegt beziehungsweise entgegengerichtet ist.

Bezüglich der Ausführung der Federeinheit bestehen eine Vielzahl von Möglichkeiten. In vorliegendem Fall für den Einsatz in Kreuzgelenkanordnungen ist diese als ringförmige Spiralfeder ausgeführt.

Die im statischen Zustand erforderliche bzw. Im Betrieb unter elastischer Verformung benötigte Vorspannung wird dabei
- über das gewählte Material und/oder
- die geometrische Auslegung
erzeugt.

Die Materialwahl für die Federeinheit umfasst im einfachsten Fall unlegierte Federstähle.

Die Dichteinheit selbst umfasst mindestens eine Dichtlippe, die durch die Federeinheit abgestützt ist. Vorzugsweise sind eine Mehrzahl von Dichtlippen vorgesehen, die beliebig zueinander angeordnet werden können. Für den Einsatz in Kreuzgelenken ist zur Abdichtung der Lageranordnung im Bereich der Zapfenwurzel zumindest eine weitere zweite Dichtlippe vorteilhaft, welche quasi die Funktion einer vorgeschalteten Dichtung übernimmt, während die federunterstützte Dichtlippe die Funktion der Hauptdichtung übernimmt.

Die Dichteinheit, insbesondere die federvorgespannte erste Dichtlippe, dient der Abdichtung an einer zylindrischen Fläche am Innenumfang

Die Dichtlippen können dabei je nach Ausführung entweder einteilig oder aber als bauliche Einheit mit einer Trageinheit ausgeführt werden. Im einfachsten Fall umfasst die Trageinheit bei zwei Dichtlippen zumindest ein Tragelement. Bei zwei oder mehr Tragelementen sind diese vorzugsweise unlösbar, beispielsweise durch Stoffschluss, miteinander verbunden oder werden von einem integralen Bauteil gebildet oder sind kraft- und/oder formschlüssig miteinander verbunden . Die Tragelemente sind dabei ringförmig ausgeführt und weisen vorzugsweise je nach Ausrichtung der Dichtlippen entsprechend gestaltete Vorsprünge auf, an denen die Dichtlippen befestigt werden können. Die Vorsprünge sind in Umfangsrichtung betrachtet in radialer Richtung nach außen gerichtet, dementsprechend auch die erste und zweite Dichtlippe. Die Federeinheit ist zwischen der ersten Dichtlippe und der Trageinheit angeordnet.

Bezüglich der verwendeten Materialien für die Dichtlippen bestehen keine Restriktionen. Dabei wird auf herkömmliche Materialien wie z. B. FPM oder NBR zurückgegriffen. Diese werden in Abhängigkeit vom Einsatzfall ausgewählt.

Die Ausführung der Tragelemente beziehungsweise der Trageinheit bei Ausführung als Einzelbauteil kann hinsichtlich der Anordnung der Vorsprünge beliebig erfolgen. Dies richtet sich nach der gewünschten Anordnung und Ausrichtung der Dichtflächen. Bei Ausführung der Dichtlippen aus unterschiedlichem Material zum Tragelement beziehungsweise zur Trageinheit sind vorzugsweise die Dichtlippen an die Trageinheit anvulkanisiert.

Die erfindungsgemäße Lösung wird nachfolgend anhand von Figuren erläutert. Darin ist im Einzelnen folgendes dargestellt:
- Figur 1: verdeutlicht in schematisch vereinfachter Darstellung anhand eines Ausschnittes aus einem Axialschnitt aus einer Kreuzgelenkanordnung die Anordnung einer erfindungsgemäß ausgeführten Dichteinheit;
- Figur 2: verdeutlicht einen Ausschnitt gemäß Figur 1.
- Figur 3: verdeutlicht eine Ausführung einer Dichteinheit mit einteiliger Trageinheit.

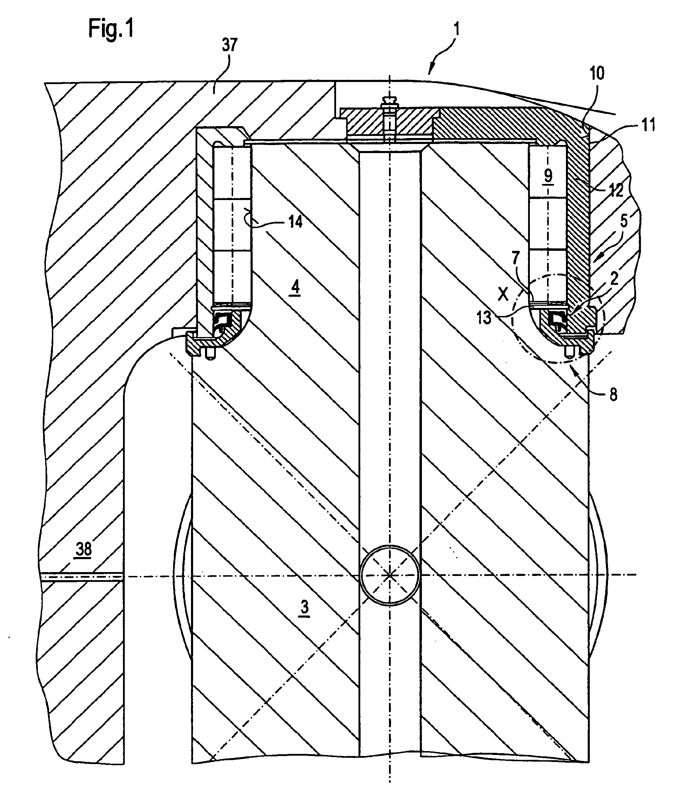

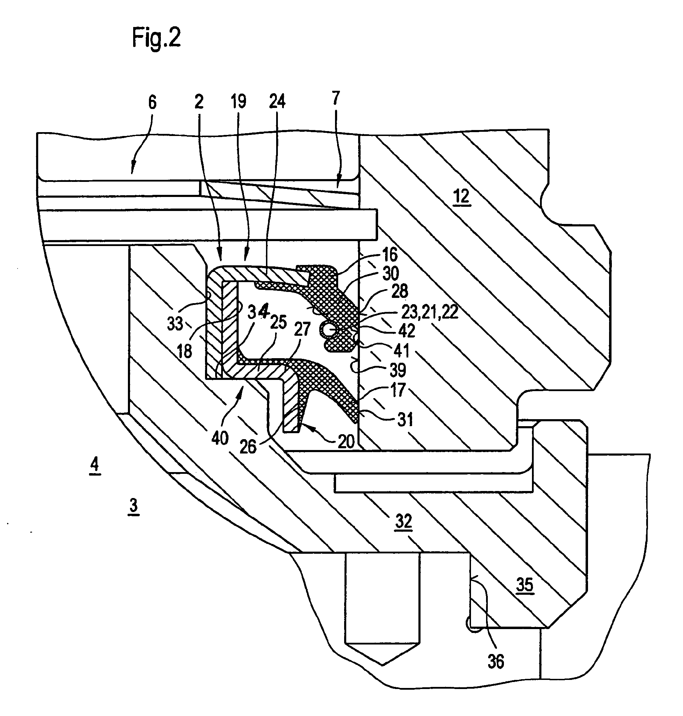

Die Figur 1 verdeutlicht in schematisch vereinfachter Darstellung anhand eines Ausschnittes aus einem Axialschnitt einer Kreuzgelenkanordnung 1 den Grundaufbau einer erfindungsgemäß ausgeführten Dichteinheit 2 einmal für eine Lagerausführung in Sacklochbohrung (links) und einmal eine Ausführung mit Durchgangsbohrung (rechts).Die Dichteinheit 2 ist im Detail X in Figur 2 vergrößert dargestellt ist. Die Kreuzgelenkanordnung umfasst dabei ein Zapfenkreuz 3, welches jeweils zwei auf einer gemeinsamen Achse angeordnete zapfenumfassende Zapfenanordnungen umfasst, wobei jede Zapfenanordnung in einer Gelenkgabel gelagert ist. Die beiden Zapfenanordnungen sind dabei um 90 Grad zueinander versetzt in Umfangsrichtung angeordnet. Die Lagerung der einzelnen Zapfen erfolgt dabei jeweils über eine Lageranordnung, hier beispielhaft anhand des Ausschnittes für den Zapfen 4 mittels einer Lageanordnung 5 in der Gelenkgabelhälfte 38 der Gelenkgabel 37. Die Lageranordnung 5 umfasst zumindest ein Radiallager 6 zur Abstützung des Zapfenkreuzes 3 in radialer Richtung und vorzugsweise ein Axiallager 7. Im dargestellten Fall ist das Axiallager 7 im Bereich der Zapfenwurzel 8 angeordnet. Das Radiallager 6 ist in der Regel als Wälzlager ausgeführt, wobei die Abstützung der Wälzkörper 9 wenigstens mittelbar, das heißt direkt an der Innenfläche 10 der Lagerbohrung 11 in der Gelenkgabelhälfte 38 oder aber wie in der Figur dargestellt über einen Außenring 12 das Radiallager 6 an der Innenfläche 10 der Lagerbohrung 11 abstützt. Das Axiallager 7 kann als Wälzlager oder aber auch als Gleitlager ausgeführt sein. Im letztgenannten Fall ist lediglich eine Druckscheibe 13 vorhanden. Die Wälzkörper 9 des Radiallagers 6 stützen sich dabei wenigstens mittelbar am Zapfen 4, beispielsweise über einen Innenring des Radiallagers oder aber, wie in Figur 1 dargestellt, direkt am Zapfen 4, das heißt dem Außenumfang 14 ab. Die Abstützung des Axiallagers 7 erfolgt dabei beispielsweise am Außenring 12 des Radiallagers 6. Die Dichteinheit 2 ist dabei der Lageranordnung 5 derart zugeordnet, dass diese das Radiallager 6 und vorzugsweise bei Anordnung des Axiallagers 7 im Bereich der Zapfenwurzel 8 auch dieses gegenüber der Umgebung abdichtet. Der konkrete Aufbau der Dichteinheit 2 ist in Figur 2 anhand eines Details aus Figur 1 wiedergegeben. Dabei umfasst die Dichteinheit 2 ein hohlzylindrisches Element 15, von welchem sich in radialer Richtung zwei Dichtlippen, eine erste Dichtlippe 16 und eine zweite Dichtlippe 17, erstrecken. Die Erstreckung der Dichtlippen 16 und 17 erfolgt dabei bezugsweise ausgehend vom Außenumfang 18 des hohlzylindrischen Elementes 15. Die Dichteinheit 2 kann mehrteilig ausgeführt sein. Vorzugsweise sind die einzelnen Dichtlippen, erste Dichtlippe 16 und zweite Dichtlippe 17, jeweils an am Außenumfang 18, vorzugsweise in radialer Richtung ausgerichteten Vorsprüngen 19 und 20 angeordnet. Erfindungsgemäß ist der ersten Dichtlippe 16 eine Federeinheit 21 in Form einer Druckfeder 22 zugeordnet, die die erste Dichtlippe 16 in radialer Richtung nach außen drückt und damit die Dichtlippe 16 in ihrer Lage gegenüber den Anschlusselementen vorspannt. Die Druckfeder 22 ist dabei vorzugsweise als integrales Bauteil mit der Dichtlippe 16 oder aber als separater Wellendichtring 23 ausgeführt. Die beiden Dichtlippen, erste Dichtlippe 16 und zweite Dichtlippe 17, vorzugsweise jedoch zumindest die erste Dichtlippe 16, sind derart ausgestaltet, dass diese geeignet sind, an einer zylindrischen Innenfläche, hier dem Innenumfang 39, zum Anliegen zu gelangen. Die Dichtlippen 16 und 17 sind dabei ringförmig ausgebildet und erstrecken sich vom Außenumfang 18 des hohlzylindrischen Elementes 15 wenigstens teilweise, vorzugsweise vollständig in radialer Richtung.

Gemäß Figur 2 ist das hohlzylindrische Element 15 mehrteilig ausgeführt. Dieses umfasst eine Trageinheit 40, umfassend ein erstes Tragelement 24 und ein zweites Tragelement 25, wobei beide miteinander vorzugsweise unlösbar verbunden sind. Die Verbindung kann dabei beispielsweise durch Stoffschluss erfolgen. Ferner denkbar ist es, erstes und zweites Tragelement 24 und 25 von einem einzigen Bauteil zu bilden. An der Trageinheit 40 sind die Dichtlippen 16 und 17 angeordnet. Diese erstrecken sich dabei jeweils in radialer Richtung vom Außenumfang 18 im Anwendungsbereich weg. Die einzelnen Dichtlippen 16 und 17 sind dabei vorzugsweise anvulkanisiert. Im dargestellten Fall weist das hohlzylindrische Element 15 dazu zwei Vorsprünge auf, einen ersten Vorsprung, welcher die erste Dichtlippe 16 trägt und der hier mit 26 bezeichnet ist und ebenfalls in radialer Richtung ausgerichtet ist, und einen zweiten Vorsprung 27, der in Einbaulage in der Kreuzgelenkanordnung 1 in Achsrichtung des Zapfens 4 ausgerichtet ist. Der erste Vorsprung 19 ist dabei im ersten Tragelement 24 angeordnet und der zweite Vorsprung 20 im zweiten Tragelement 25. Das erste Tragelement weist dabei ein L-förmiges Querschnittsprofil auf, das zweite Tragelement 25 ein S-förmiges Querschnittsprofil, das heißt ist durch zweifach in unterschiedliche Richtungen, einer jeweils um 90 Grad Winkel zueinander gebogene Bereiche 26, 27 charakterisiert. Die Ausführung der Tragelemente 24, 25 kann unterschiedlich erfolgen. Die dargestellte Ausführung stellt ein besonders geeignetes Beispiel dar. Dabei wird jedoch immer darauf geachtet, dass die die Dichtlippen 16 und 17 tragenden Vorsprünge 19 und 20 diese in geeigneter Weise tragen und abstützen können. Die Dichtlippe 16 bildet dabei eine erste Dichtfläche 28, welche an einem Anschlusselement gemäß Figur 1 in Form des Außenringes 12 des Radiallagers 6 zum Anliegen kommt. Die Dichtfläche 28 wird in ihrer Lage durch die Druckfeder 22 fixiert und gegenüber der zweiten Fläche der zu bildenden Dichtpaarung 42 vorgespannt. Diese zweite Fläche 41 wird dabei von einem Flächenbereich des Innenumfanges 39 des Außenringes 12 gebildet. Die Druckfeder 22 ist wie bereits ausgeführt als Wellendichtring 23 ausgebildet und stützt die erste Dichtlippe 16 an der von der Dichtfläche 28 abgewandten Stirnseite 30 ab. Die Dichtfläche 31 an der zweiten Dichtlippe 17 wird durch die Ausgestaltung dieser Dichtlippe sowie die Anbindung an das Tragelement 25 in ihrer Lage gehalten. Auf jeden Fall fungiert die erste Dichtlippe 16 als Hauptdichtung, die zweite beispielsweise als Vorschaltdichtung. Die Dichteinheit 2 ist dabei über einen Dichtungshalter 32 am Zapfenkreuz 3 abgestützt, hier insbesondere am Zapfen 4. Der Dichtungshalter 32 weist dabei im Querschnitt betrachtet im wesentlichen ein L-förmiges Profil auf, wobei dieser eine erste Abstützfläche 33, welche in radialer Richtung ausgerichtet ist, und eine zweite Abstützfläche 34 in axialer Richtung, d. h. im wesentlichen senkrecht zur radial ausgerichteten Abstützfläche 33, ausgebildet ist und an welchem die Dichteinheit 2 zum Anliegen kommt, aufweist. Ferner sind Anschläge vorgesehen, hier ein Anschlag 35, der an einer entsprechenden Zentrierfläche 36 am Zapfenkreuz 3 zum Anliegen kommt.

Die Federeinrichtung 21 in Form der Druckfeder 22 ermöglicht eine gute statische Abdichtung sowie einen Ausgleich bei Wärmeausdehnung und eine optimale Abdichtung bei größeren Rauheiten und dünnflüssigen oder gasförmigen Medien. Dabei wird die Dichtlippe 16, insbesondere die Dichtfläche 28, während des Betriebes aufgrund der Fliehkräfte mit steigender Drehzahl nach außen gedrückt und die Dichtwirkung verstärkt. Bezüglich der verwendeten Materialien für die Federeinheit 21 bestehen eine Mehrzahl von Möglichkeiten. Im einfachsten Fall ist dieser als unlegierter Federstahl ausgeführt.

Die erfindungsgemäße Ausführung einer federunterstützten Wellendichtung ermöglicht es dabei, zum einen optimale Abdichtgegebenheiten zu schaffen und ist ferner durch einen einfachen Aufbau charakterisiert.

Verdeutlicht die Figur 2 in Ausführung mit nach außen gerichteten Dichtlippen 16 und 17, wobei beide vorzugsweise parallel zueinander beziehungsweise die Dichtflächen vorzugsweise in einer Ebene liegend ist es auch denkbar, die einzelnen Dichtlippen je nach Einbausituation unterschiedlich zueinander auszurichten, dies gilt auch für die Dichtflächen 28 und 31.

Wie bereits ausgeführt, kann die Kopplung zwischen dem Tragelement, insbesondere den einzelnen Tragelementen 24 und 25, form- und/oder stoffschlüssig erfolgen.

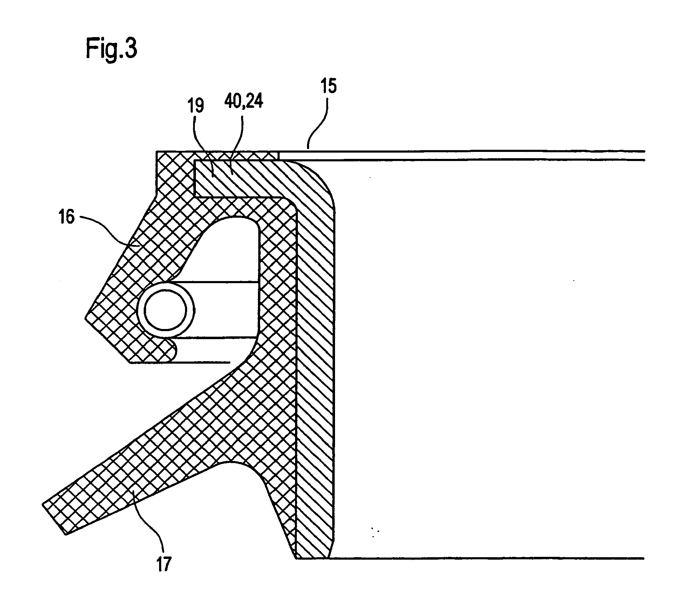

Die Figur 3 verdeutlicht eine besonders vorteilhafte Ausführung einer Dichteinheit 2 gemäß Figur 2 mit jedoch einteiliger Trageinheit 40. Dieses ist beispielhaft als hohlzylindrisches Element 15 mit einem in radialer Richtung nach außen gerichteten Vorsprung 19 ausgeführt, an dem die erste Dichtlippe 16 angeordnet ist. Der Grundaufbau der Dichteinheit 2 entspricht dem in der Figur 2 beschriebenen, weshalb für gleiche Elemente die gleichen Bezugszeichen verwendet werden. Lediglich das Tragelement 24 und 25 sind zu einem Tragelement 24 zusammengefasst, welches als hohlzylindrisches Bauteil mit Vorsprung 19, welches im Querschnitt durch ein L-Profil charakterisiert ist, ausgeführt ist. Die zweite Dichtlippe 17 ist dabei direkt am in einem Winkel zum Vorsprung 19 ausgerichteten Schenkel des L-Profils, d. h. der Innenwandung des hohlzylindrischen Elementes 15, angeordnet. Die Funktion des Tragelementes 25 aus Figur 2 wird vom Tragelement 24 mit übernommen.

### Bezugszeichenliste

- 1: Kreuzgelenkanordnung
- 2: Dichteinheit
- 3: Zapfenkreuz
- 4: Zapfen
- 5: Lageranordnung
- 6: Radiallager
- 7: Axiallager
- 8: Zapfenwurzel
- 9: Wälzkörper
- 10: Innenfläche
- 11: Lagerbohrung
- 12: Außenring
- 13: Druckscheibe
- 14: Außenumfang
- 15: hohlzylindrisches Element
- 16: erste Dichtlippe
- 17: zweite Dichtlippe
- 18: Außenumfang des hohlzylindrischen Elementes
- 19: Vorsprung
- 20: Vorsprung
- 21: Federeinheit
- 22: Druckfeder
- 23: Wellendichtring
- 24: erstes Tragelement
- 25: zweites Tragelement
- 26: Bereich
- 27: Bereich
- 28: Dichtfläche
- 29: Dichtfläche
- 30: Stirnseite
- 31: Dichtfläche
- 32: Dichtungshalter
- 33: Abstützfläche
- 34: Abstützfläche
- 35: Anschlag
- 36: Zentrierfläche
- 37: Gelenkgabel
- 38: Gelenkgabelhälfte
- 39: Innenumfang
- 40: Trageinheit
- 41: Flächenbereich
- 42: Dichtpaarung

## Patentansprüche

1. Kreuzgelenkanordnung (1)
1.1 mit zumindest einem in einer Gelenkgabel (38) über eine Lageranordnung (5) gelagerten Zapfen (4) eines Zapfenkreuzes (3);
1.2 die Lageranordnung (5) umfasst ein Radiallager (6);
1.3 mit einer der Lageranordnung (5) im Bereich der Zapfenwurzel (8) zugeordneten Dichteinheit (2), welche über einen Dichtungshalter (32) am Zapfenkreuz (3) abgestützt ist;
1.4 die Dichteinheit (2) umfasst mindestens eine eine Dichtfläche (28) bildende Dichtlippe (16);
**gekennzeichnet durch** die folgenden Merkmale:
1.5 mit einer Federeinheit (21) in Form einer Druckfeder (22), welche die Dichtfläche (28) wenigstens mittelbar gegenüber der Gelenkgabel (38) vorspannt.

2. Kreuzgelenkanordnung (1) nach Anspruch 1, **dadurch gekennzeichnet, dass** die Lageranordnung (5), insbesondere das Radiallager (6), einen Außenring (12) umfasst, der sich in einer Lagerbohrung (11) der Gelenkgabel (38) abstützt und die erste Dichtlippe (16) mit ihrer Dichtfläche (28) mit einem Flächenbereich (41) am Außenring (12) des Radiallagers (6) eine Dichtpaarung (42) bildet.

3. Kreuzgelenkanordnung (1) nach Anspruch 1, **dadurch gekennzeichnet, dass** die erste Dichtlippe (16) der Dichteinheit (2) mit ihrer Dichtfläche (28) direkt an der Gelenkgabel (38) anliegt und die Federeinheit (21) die Dichtfläche (28) gegenüber der Gelenkgabel (38) verspannt.

4. Kreuzgelenkanordnung (1) nach Anspruch 1, **dadurch gekennzeichnet, dass** die erste Dichtlippe (16) der Dichteinheit (2) mit ihrer Dichtfläche (28) sich an einem bevorzugt gehärteten Ring, welcher in die Gelenkgabelbohrung eingepresst wird, anliegt und die Federeinheit (21) die Dichtfläche (28) gegenüber dem Ring verspannt.

5. Kreuzgelenkanordnung (1) nach einem der Ansprüche 1 bis 4, **dadurch gekennzeichnet, dass** die Dichtfläche (28) an einer zylindrischen Fläche am Anschlusselement-Gelenkgabel (38) oder Außenring (12) des Radiallagers (7) anliegt.

6. Kreuzgelenkanordnung (1) nach einem der Ansprüche 1 bis 5, **dadurch gekennzeichnet, dass** die Dichteinheit (2) als ringförmiges oder hohlzylindrisches Element mit mindestens einer in radialer Richtung ausgerichteten und die Dichtfläche (28) aufweisenden ersten Dichtlippe (16) ausgeführt ist.

7. Kreuzgelenkanordnung (1) nach Anspruch 6, **dadurch gekennzeichnet, dass** die Dichteinheit (16) eine Trageinheit (40) umfasst, an welcher die erste Dichtlippe (16) angeordnet ist und sich in radialer Richtung vom Außenumfang der Trageinheit erstreckt.

8. Kreuzgelenkanordnung (1) nach Anspruch 7, **dadurch gekennzeichnet, dass** die Trageinheit (40) und die erste Dichtlippe (16) eine integrale Baueinheit bilden.

9. Kreuzgelenkanordnung nach Anspruch 7 oder 8, **dadurch gekennzeichnet, dass** die Trageinheit (40) und die erste Dichtlippe (16) stoffschlüssig miteinander verbunden sind.

10. Kreuzgelenkanordnung nach Anspruch 7, **dadurch gekennzeichnet, dass** die Trageinheit (40) und die erste Dichtlippe (16) kraft- und/oder formschlüssig miteinander verbunden sind.

11. Kreuzgelenkanordnung (1) nach Anspruch 8, **dadurch gekennzeichnet, dass** die Dichtlippe (16) und die Trageinheit (40) einteilig ausgeführt sind.

12. Kreuzgelenkanordnung (1) nach einem der Ansprüche 1 bis 11, **dadurch gekennzeichnet, dass** die Federeinheit (21) als ringförmiges Element ausgeführt ist, welches an der von der der Dichtfläche (28) gegenüberliegenden und entgegengesetzt ausgerichteten Fläche (30) an der ersten Dichtlippe (16) wirkt.

13. Kreuzgelenkanordnung (1) nach Anspruch 12, **dadurch gekennzeichnet, dass** die Federeinheit (21) einen kreisrunden Querschnitt aufweist.

14. Kreuzgelenkanordnung (1) nach einem der Ansprüche 12 oder 13, **dadurch gekennzeichnet, dass** die erste Dichtlippe (16) und die Federeinheit (21) formschlüssig miteinander verbunden sind.

15. Kreuzgelenkanordnung (1) nach einem der Ansprüche 1 bis 14, **dadurch gekennzeichnet, dass** die Dichteinheit (2) mindestens eine weitere Dichtlippe (17) umfasst.

16. Kreuzgelenkanordnung (1) nach einem der Ansprüche 1 bis 15, **dadurch gekennzeichnet, dass** die zweite Dichtlippe (17) eine Dichtfläche (29) bildet, welche parallel zur ersten Dichtfläche (28) ausgeführt ist.

17. Kreuzgelenkanordnung (1) nach einem der Ansprüche 15 oder 16, **dadurch gekennzeichnet, dass** die zweite Dichtlippe (17) mit der ersten Dichtlippe (16) und der Trageinheit (40) eine bauliche Einheit bildet.

18. Kreuzgelenkanordnung (1) nach Anspruch 17, **dadurch gekennzeichnet, dass** die Trageinheit (40) zwei Tragelemente (24, 25) umfasst, welche ringförmig ausgeführt sind und von deren Außenumfang sich die Dichtlippen (16, 17) in radialer Richtung erstrecken.

19. Kreuzgelenkanordnung (14) nach Anspruch 18, **dadurch gekennzeichnet, dass** die Tragelemente (24, 25) von einer einteiligen Baueinheit gebildet werden.

20. Kreuzgelenkanordnung (14) nach Anspruch 18, **dadurch gekennzeichnet, dass** die Tragelemente (24, 25) von separaten Bauelementen gebildet werden, die lösbar oder unlösbar miteinander verbunden sind.

21. Kreuzgelenkanordnung (1) nach einem der Ansprüche 1 bis 20, **dadurch gekennzeichnet, dass** die einzelnen Dichtlippen (16, 17) an der Trageinheit (40) anvulkanisiert sind.

## Claims

1. A universal joint arrangement (1);
1.1 with at least one journal (4) of a journal cross (3) held in a joint yoke (38) via a bearing arrangement (5);
1.2 the bearing arrangement (5) comprises a radial bearing (6);
1.3 with a sealing unit (2) associated with the bearing arrangement (5) in the region of the journal root (8), which sealing unit is supported on the journal cross (3) via a seal holder (32);
1.4 the sealing unit (2) comprises at least one sealing lip (16) forming a sealing surface (28);
**characterized by** the following features:
1.5 with a spring unit (21) in form of a pressure spring (22) which pretensions the sealing surface (28) at least indirectly in relation to the joint yoke (38).

2. A universal joint arrangement (1) according to claim 1, **characterized in that** the bearing arrangement (5), and the radial bearing (6) in particular, comprises an outer ring (12) which is supported in a bearing bore (11) of the joint yoke (38), and the first sealing lip (16) forms with its sealing surface (28) a sealing pairing (42) with a surface area (41) on the outer ring (12) of the radial bearing (6).

3. A universal joint arrangement (1) according to claim 1, **characterized in that** the first sealing lip (16) of the sealing unit (2) rests with its sealing surface (28) directly on the joint yoke (38) and the spring unit (21) tensions the sealing surface (28) in relation to the joint yoke (38).

4. A universal joint arrangement (1) according to claim 1, **characterized in that** the first sealing lip (16) of the sealing unit (2) rests with its sealing surface (28) on a preferably hardened ring which is pressed into the joint yoke bore, and the spring unit (21) tensions the sealing surface (28) in relation to the ring.

5. A universal joint arrangement (1) according to one of the claims 1 to 4, **characterized in that** the sealing surface (28) rests on a cylindrical surface on the connecting element - joint yoke (38) or outer ring (12) of the radial bearing (7).

6. A universal joint arrangement (1) according to one of the claims 1 to 5, **characterized in that** the sealing unit (2) is arranged as an annular or hollow-cylindrical element with at least one first sealing lip (16) which is aligned in the radial direction and comprises the sealing surface (28).

7. A universal joint arrangement (1) according to claim 6, **characterized in that** the sealing unit (16) comprises a support unit (40) on which the first sealing lip (16) is arranged and which extends in the radial direction from the outside circumference of the support unit.

8. A universal joint arrangement (1) according to claim 7, **characterized in that** the support unit (40) and the first sealing lip (16) form an integral unit.

9. A universal joint arrangement according to claim 7 or 8, **characterized in that** the support unit (40) and the first sealing lip (16) are materially connected with each other.

10. A universal joint arrangement according to claim 7, **characterized in that** the support unit (40) and the first sealing lip (16) are connected with each other in a friction-locked and/or interlocked manner.

11. A universal joint arrangement according to claim 8, **characterized in that** the sealing lip (16) and the support unit (40) are integrally arranged.

12. A universal joint arrangement (1) according to one of the claims 1 to 11, **characterized in that** the spring unit (21) is arranged as an annular element which acts on the first sealing lip (16) on the surface (30) which is opposite of the sealing surface (28) and is aligned oppositely thereto.

13. A universal joint arrangement (1) according to claim 12, **characterized in that** the spring unit (21) has a circular cross-section.

14. A universal joint arrangement (1) according to one of the claims 12 or 13, **characterized in that** the first sealing lip (16) and the spring unit (21) are connected with each other in an interlocking manner.

15. A universal joint arrangement (1) according to one of the claims 1 to 14, **characterized in that** the sealing unit (2) comprises at least one further sealing lip (17).

16. A universal joint arrangement (1) according to one of the claims 1 to 15, **characterized in that** the second sealing lip (17) forms a sealing surface (29) which is arranged in parallel to the first sealing surface (28).

17. A universal joint arrangement (1) according to one of the claims 15 or 16, **characterized in that** the second sealing lip (17) forms a structural unit with the first sealing lip (16) and the support unit (40).

18. A universal joint arrangement (1) according to claim 17, **characterized in that** the support unit (40) comprises two support elements (24, 25) which are arranged in an annular fashion, with the sealing lips (16, 17) extending from the outside circumference thereof in the radial direction.

19. A universal joint arrangement (14) according to claim 18, **characterized in that** the support elements (24, 25) are formed by an integral unit.

20. A universal joint arrangement (14) according to claim 18, **characterized in that** the support elements (24, 25) are formed by separate components which are connected with each other in a detachable or non-detachable manner.

21. A universal joint arrangement (1) according to one of the claims 1 to 20, **characterized in that** the individual sealing lips (16, 17) are vulcanized to the support unit (40).

## Revendications

1. Disposition de joint à croisillon (1)
1.1 avec au moins un tourillon (4) d'un croisillon (3) supporté dans une fourche d'articulation (38) par un dispositif de palier (5) ;
1.2 le dispositif de palier (5) comprend un palier à charge radiale (6) ;
1.3 avec une unité d'étanchéité (2) associée au dispositif de palier (5) au niveau de la racine du tourillon (8), qui s'appuie sur le croisillon (3) à l'aide d'un support de garniture d'étanchéité (32) ;
1.4 l'unité d'étanchéité (2) comprend au moins une lèvre d'étanchéité (16) formant une surface d'étanchéité (28) ;
**caractérisée en ce que** :
1.5 avec une unité de ressort (21) prenant la forme d'un ressort de compression (22), qui précontraint au moins indirectement la surface d'étanchéité (28) vis-à-vis de la fourche d'articulation (38).

2. Disposition de joint à croisillon (1) selon la revendication 1, **caractérisée en ce que** le dispositif de palier (5), en particulier le palier à charge radiale (6), comprend une bague extérieure (12) qui s'appuie dans un alésage de palier (11) de la fourche d'articulation (38) et la première lèvre d'étanchéité (16) forme une paire d'étanchéité (42) par sa surface d'étanchéité (28) avec une zone de surface (41) sur la bague extérieure (12) du palier à charge radiale (6).

3. Disposition de joint à croisillon (1) selon la revendication 1, **caractérisée en ce que** la première lèvre d'étanchéité (16) de l'unité d'étanchéité (2) repose directement sur la fourche d'articulation (38) par sa surface d'étanchéité (28) et l'unité de ressort (21) contraint la surface d'étanchéité (28) vis-à-vis de la fourche d'articulation (38).

4. Disposition de joint à croisillon (1) selon la revendication 1, **caractérisée en ce que** la première lèvre d'étanchéité (16) de l'unité d'étanchéité (2) repose par sa surface d'étanchéité (28) sur une bague de préférence durcie qui est enfoncée dans l'alésage de la fourche d'articulation, et l'unité de ressort (21) contraint la surface d'étanchéité (28) vis-à-vis de la bague.

5. Disposition de joint à croisillon (1) selon l'une des revendications 1 à 4, **caractérisée en ce que** la surface d'étanchéité (28) repose sur une surface cylindrique de l'élément de raccordement - la fourche d'articulation (38) ou la bague extérieure (12) du palier à charge radiale (7).

6. Disposition de joint à croisillon (1) selon l'une des revendications 1 à 5, **caractérisée en ce que** l'unité d'étanchéité (2) est construite comme un élément annulaire ou cylindrique creux avec au moins une première lèvre d'étanchéité (16) orientée dans le sens radial et présentant la surface d'étanchéité (28).

7. Disposition de joint à croisillon (1) selon la revendication 6, **caractérisée en ce que** l'unité d'étanchéité (16) comprend une unité portante (40) sur laquelle la lèvre d'étanchéité (16) est disposée et qui s'étend dans le sens radial à partir de la circonférence extérieure de l'unité portante.

8. Disposition de joint à croisillon (1) selon la revendication 7, **caractérisée en ce que** l'unité portante (40) et la première lèvre d'étanchéité (16) forment une unité de construction d'un seul tenant.

9. Disposition de joint à croisillon selon la revendication 7 ou 8, **caractérisée en ce que** l'unité portante (40) et la première lèvre d'étanchéité (16) sont reliées l'une à l'autre par solidarité de matière.

10. Disposition de joint à croisillon selon la revendication 7, **caractérisée en ce que** l'unité portante (40) et la première lèvre d'étanchéité (16) sont reliées l'une à l'autre par adhérence et/ou par correspondance de forme.

11. Disposition de joint à croisillon (1) selon la revendication 8, **caractérisée en ce que** la lèvre d'étanchéité (16) et l'unité portante (40) sont réalisées d'une pièce.

12. Disposition de joint à croisillon (1) selon l'une des revendications 1 à 11, **caractérisée en ce que** l'unité de ressort (21) est réalisée comme un élément annulaire, qui agit sur la surface (30) de la première lèvre d'étanchéité (16) faisant face à la surface d'étanchéité (28) et orientée à l'opposé.

13. Disposition de joint à croisillon (1) selon la revendication 12, **caractérisée en ce que** l'unité de ressort (21) présente une section circulaire.

14. Disposition de joint à croisillon (1) selon l'une des revendications 12 ou 13, **caractérisée en ce que** la première lèvre d'étanchéité (16) et l'unité de ressort (21) sont reliées entre elles par correspondance de forme.

15. Disposition de joint à croisillon (1) selon l'une des revendications 1 à 14, **caractérisée en ce que** l'unité d'étanchéité (2) comprend au moins une autre lèvre d'étanchéité (17).

16. Disposition de joint à croisillon (1) selon l'une des revendications 1 à 15, **caractérisée en ce que** la deuxième lèvre d'étanchéité (17) forme une surface d'étanchéité (29) qui est parallèle à la première surface d'étanchéité (28).

17. Disposition de joint à croisillon (1) selon l'une des revendications 15 ou 16, **caractérisée en ce que** la deuxième lèvre d'étanchéité (17) forme une unité de construction avec la première lèvre d'étanchéité (16) et l'unité portante (40).

18. Disposition de joint à croisillon (1) selon la revendication 17, **caractérisée en ce que** l'unité portante (40) comprend deux éléments portants (24, 25) qui sont en forme d'anneau et à partir de la circonférence extérieure desquels les lèvres d'étanchéité (16, 17) s'étendent dans le sens radial.

19. Disposition de joint à croisillon (14) selon la revendication 18, **caractérisée en ce que** les éléments portants (24, 25) sont formés par une unité de construction d'une pièce.

20. Disposition de joint à croisillon (14) selon la revendication 18, **caractérisée en ce que** les éléments portants (24, 25) sont formés par des éléments de construction séparés qui sont reliés entre eux de manière amovible ou inamovible.

21. Disposition de joint à croisillon (1) selon l'une des revendications 1 à 20, **caractérisée en ce que** les différentes lèvres d'étanchéité (16, 17) sont fixées par vulcanisation sur l'unité portante (40).
